Europäisches Patentamt

European Patent Office

Office européen des brevets

(19)

(11) Publication number: **0 301 783**
**A2**

# EUROPEAN PATENT APPLICATION

(21) Application number: 88306804.1

(22) Date of filing: 25.07.88

(51) Int. Cl.⁴ **C22B 3/00**

(30) Priority: 28.07.87 BG 80754/87

(43) Date of publication of application:
01.02.89 Bulletin 89/05

(84) Designated Contracting States:
AT BE CH DE ES FR GB IT LI NL SE

(71) Applicant: INSTITUT PO INJENERNA CHIMIA
Akademic Bonchev Street Block 103
BG-1040 Sofia(BG)

(72) Inventor: Kyuchoukov, Georgi Dimitrov 1336
Sofia
Komplex Lyulin 612-Street
Bl 614-4(BG)
Inventor: Mihaylov, Indje Ognyanov
1184 Sofia Komplex Mladost-1
Block 13(BG)
Inventor: Elenkov, Dimiter Georgiev
1113 Sofia Komplex Iztok
Block 48-B(BG)
Inventor: Boyadjiev, Lyubomir Antonov
1113 Sofia
Nesabravka Street 1B(BG)
Inventor: Fletcher, Archibald W.
9422 E. Placita Eunice Tucson
Arizona 85715(US)

(74) Representative: Silverman, Warren et al
HASELTINE LAKE & CO. Hazlitt House 28
Southampton Buildings Chancery Lane
London WC2A 1AT(GB)

(54) Method for the recovery of metals from chloride solutions.

(57) A method for the recovery of metals, generally heavy metals or chelatable metals such as zinc or copper from chloride solutions such as acid chloride etching solutions comprises extracting the metal with a mixed extracting agent of anion exchange/chelating, solvating/cation exchange or anion exchange/cation exchange character, separating the organic phase washing it with water, aqueous ammonia or aqueous ammoniacal ammonium sulphate, stripping the metal from the organic phase thereby obtained by contacting it with sulphuric acid and returning the organic phase to the extraction stage for reuse after regenerating it.

## METHOD FOR THE RECOVERY OF METALS FROM CHLORIDE SOLUTIONS

This invention relates to a method for the recovery of known metals, generally heavy metals or chelatable metals, from metal-containing chloride solutions and is applicable to the recovery of metals from solutions produced in metallurgy, to the regeneration of acid chloride etching solutions and to the treatment of waste waters.

In one method for the recovery of copper from hydrochloric acid solutions (US-A-4,272,492), copper is extracted as a copper chloride complex using a mixture of a tertiary amine, isodecanol and kerosene. After the extraction, copper is stripped from the complex in the organic phase into an aqueous phase and is extracted again from the aqueous phase at controlled pH using a chelating agent ( $\beta$-diketone LIX 54). The metal is stripped from the chelate compound extracted using an aqueous solution of $H_2SO_4$. Thus, copper sulphate solution is produced from which copper is obtained either as copper sulphate by crystallisation or as metallic copper by electrolytic recovery. The residual amount of copper is recovered from the initial hydrochloric acid solution or in the aqueous solution from which $CuSO_4$ has been crystallised or from which copper has been extracted electrolytically, by extraction at controlled pH with a further chelating agent (an oxime - LIX 64) dissolved in kerosene.

This procedure suffers from a complicated sequence of steps involving repeated extractions and strippings under differing conditions necessitated by the specific operating conditions required by each of the extracting agents.

It is an object of the present invention to provide a method for the recovery of metals from chloride solutions which is relatively simple to carry out and does not require repeated extraction and stripping stages.

According to the present invention, there is provided a method for the recovery of a metal from an aqueous chloride solution containing ions of the metal, which comprises extracting the metal by means of an organic extracting agent, separating off the organic phase and stripping the metal from the organic phase to regenerate the extracting agent, characterised in that the metal is extracted from the chloride solution as a metal chloride complex with either (a) a mixture of anion-exchange extracting agent and a chelating extracting agent or (b) a mixture of a solvating extracting agent and a cation-exchange extracting agent or (c) a mixture of an anion extracting agent and a cation-exchange extracting agent, the aqueous raffinate obtained then being separated from the organic phase and the organic phase being freed from chloride ions by washing with water, an aqueous ammonia solution or an aqueous ammoniacal ammonium sulphate solution, followed by stripping the metal from the organic phase by contacting of the latter with aqueous sulphuric acid to yield an aqueous solution of a metal sulphate and returning the organic phase to the extraction stage after regenerating it with a fresh supply of chloride ion-containing aqueous solution.

An anion exchange extracting agent which may be used in the practice of this invention in a mixed extracting agent may comprise a tertiary amine, preferred examples of which are (a) tri-n-octylamine, (b) tri-iso-octylamine, (c) tri-iso-decylamine or (d) a mixture of trioctylamine and tridecylamine. The chelating agent is typically a $\beta$-diketone or oxime. The $\beta$-diketone is preferably a phenylalkyl $\beta$-diketone and the oxime is preferably 2-hydroxy-5-nonylacetophenone oxime, 5-dodecylsalicyl-aldoxime, a mixture of dodecylsalicyl-aldoxime and tridecanol or a mixture of 5-dodecylsalicylaldoxime and 2-hydroxy-5-nonylaceto phenone oxime. The extracting agent is preferred dissolved in kerosene.

A solvating extracting agent which may be used in mixed extracting agent (b) may be tributyl phosphate (TBP) or trioctylphosphine oxide (TOPO). A cation exchange extracting agent which may be employed in extracting agent (b) or (c) is preferably di-2-ethylhexyl phosphoric acid (D2EHPA). This extracting agent like the other aforesaid extracting agents is preferably used in solution in kerosene.

The anion exchange extracting agent and chelating extracting agent as well as the mixture of anionic and cationic exchange extracting agents may have an amine content of from 5 to 50% by volume. The amount of solvating extracting agent in the mixture of solvating and cation exchange extracting agents can be from 5 to 50 vol.%. The content of solvating extracting agent in the mixture of solvating and cation exchange extracting agent can be from 5 to 50 vol.%.

After the extraction stage, the washing of the loaded extracting agent can be carried out (a) with water or (b) with an aqueous ammonia solution or (c) with ammoniacal ammonium sulphate solution at a pH of from 4 to 7. The ammoniacal ammonium sulphate solution can be prepared by saturating with ammonia ammonium sulphate solution produced during the regeneration of the extracting agent.

Stripping of metal cations from the mixed extracting agent is carried out with an aqueous solution of sulphuric acid preferably having an $H_2SO_4$

concentration of 150 to 250 g/l. After removal of the metal cations, the residual mixed extracting agent is regenerated with an aqueous solution containing chloride ions. For this purpose, there can be added an aqueous solution of NaCl or NH₄Cl as well as the NH₄Cl solution produced when washing of the loaded extracting agent has taken place.

The method of the invention yields the following advantages:

- the method enables metals to be recovered readily from chloride solutions. It does not require repeated extraction and stripping stages making it possible to work with an overall simple flow scheme compared with the aforementioned prior art procedure. This is fundamentally because the two stages of stripping metal from a first extracting agent and extraction of metal from organic phase thus containing the metal by a second extracting agent are combined;

- there is no need to provide different specific conditions such as might be needed by each extracting agent when used separately.

The following Examples illustrate the invention:

## EXAMPLE 1

A 40 ml sample of hydrochloric acid having a cuprous ion content of 3.90 g/l, an acidity expressible as 5.0 g ion $H^+$/l and a total chloride content amounting to 5.2 g ion $Cl^-$/l was contacted with 40 ml of a mixed extracting agent consisting of 20 vol.% tri-n-octylamine (TOA) and 80 vol.% $\beta$-diketone (LIX 54). Extraction was carried out for two minutes and phase separation was achieved to yield an aqueous phase having a copper content of 0.03 g/l and having an acidity expressible as 4.9 g ion $H^+$/l as well as a total chloride content of 4.9 g. ion $Cl^-$/l. The extraction efficiency of this procedure was 99.2%. The aqueous solution obtained was separated and the organic phase obtained was washed with 40 ml of an aqueous solution of $NH_3$ at a pH of 4.5 to 6. The concentration of $Cl^-$ in the aqueous phase obtained after washing was 0.3 g. ion $Cl^-$/l and trace amounts of copper were found in the aqueous phase. The aqueous phase was separated off and the organic phase was contacted for two minutes with 40 ml of sulphuric acid containing 150 g $H_2SO_4$ per litre. Phase separation was again carried out and the aqueous solution obtained had a copper concentration of 3.86 g/l. The organic phase was washed for two minutes with 40 ml of an aqueous solution of NaCl with a chloride ion concentration of 2.5 g ion/litre. After the washing, the chloride ion concentration of the aqueous phase obtained was 2.2 g ion/litre.

## EXAMPLE 2

A 40 ml acidic chloride etching solution containing 122.55 g of copper per litre, 1.84 g ion $H^+$/l and 5.36 g. ion $Cl^-$/l was contacted with 40 ml of a mixed extracting agent consisting of 20 vol.% trioctylamine (TOA) and 80 vol.% $\beta$-diketone (LIX 54). After extraction for two minutes and phase separation, an aqueous phase was obtained with a copper control of 108.8 g/l a chloride ion content of 4.93 g ion/litre and 1.82 molar with respect to HCl. On acidification to an adequate level, the aqueous solution was used for etching again. After separation off of the aqueous solution, the organic phase was washed with 40 ml of an aqueous solution of ammonia. The aqueous phase obtained had a pH of 5.8, a chloride ion content of 0.7 g ion/l and trace amounts of copper. The organic phase was contacted with 40 ml of aqueous sulphuric acid containing 150 g $H_2SO_4$/l. The concentration of copper in the sulphuric acid solution after stripping was 13.60 g/l. Phase separation was carried out and the organic phase was washed with 40 ml of an NaCl solution containing 2.5 g ion $Cl^-$/l. After the washing, the concentration of $Cl^-$ ions in the aqueous phase was 2.1 g ion/l. The regenerated mixed extractant was then fed back for extraction of copper from feed solution to the etching solution recovery procedure.

## EXAMPLE 3

A 40 ml sample of an acidic chloride etching solution having the same composition as that treated in Example 2 was contacted with 40 ml of a mixed extracting agent consisting of 35 vol.% TOA and 65 vol.% $\beta$-diketone (LIX 54). The operations described in Example 2 were all carried out in the order given. The concentration of copper in the sulphuric acid solution, after stripping, was 23.4 g/l.

## EXAMPLE 4

A 40 ml sample of an acidic chloride etching solution having a copper content of 101.7 g/l and 1.84 molar with respect to HCl and containing 4.7 g ion $Cl^-$/l was contacted with 40 ml of a mixed extracting agent consisting of 20 vol.% tri-iso-decylamine (Alamine 310) and 80 vol.% $\beta$-diketone (LIX 54). Following the working operations described in Example 2, carried out in the same order, the concentration of copper, after stripping, to be found in the sulphuric acid solution was 5.7 g/l.

## EXAMPLE 5

A 40 ml sample of an acidic chloride etching solution having the same composition as that treated in Example 4 was contacted with 40 ml of a mixed extracting agent consisting of 30 vol.% tri-iso-octylamine (Alamine 308), 35% of 2-hydroxy-5-nonylacetophenone oxime (LIX 84) and 35% kerosene. All operations were as described in Example 2, being carried out in the same order. The concentration of copper to be found in the sulphuric acid solution, after stripping, was 5.6 g/l.

## EXAMPLE 6

A 40 ml sample of an acidic chloride etching solution having the same composition as that treated in Example 4 was contacted with 40 ml of a mixed reactant consisting of 20 vol.% tri-iso octylamine (Alamine 308), 40 vol.% of 5-dodecylsalicylaldoxime (LIX 860) and 40% kerosene. The heterogeneous mixture obtained was then worked up by the procedure described in Example 2, with the only difference being that the initial concentration of the sulphuric acid stripping solution was 200 g/l. The concentration of copper, after stripping, to be found in the sulphuric acid solution was 4.4 g/l.

## EXAMPLE 7

A 40 ml sample of an acidic chloride etching solution having the same composition as the solution treated in Example 4 was contacted with 40 ml of a mixed extracting agent consisting of 20 vol.% of tri-iso-octyl amine (Alamine 308), 40 vol.% of a mixture of dodecylsalicylaldoxime and tridecanol in kerosene (LIX 622) and 40 vol.% kerosene. The heterogeneous mixture obtained was worked up in the manner described in Example 6, all working steps being carried out in the same order. The copper concentration in the sulphuric acid solution after stripping was 6.3 g/l.

## EXAMPLE 8

A 40 ml sample of an acidic chloride etching solution having the same composition as the sample treated in Example 4 was contacted with 40 ml of a mixed extracting agent consisting of 30 vol.% tri-iso-decylamine (Alamine 310), 35 vol.% of a mixture of 5-dodecylsalicylaldoxime and 2-hydroxy-5-nonylacetophenone oxime in kerosene (LIX 984) and 35 vol.% kerosene. The heterogeneous mixture produced was worked up in the manner described in Example 6, all working steps being carried out in the same order. The copper concentration in the sulphuric acid solution obtained after stripping was 5.8 g/l.

## EXAMPLE 9

A 40 ml acidic chloride etching solution having a copper content of 114.6 g./l, 1.84 molar with respect to HCl and containing 5.15 g ion/Cl$^-$ per litre was contacted with 40 ml of a mixed extracting agent consisting of 20 vol.% tri($C_8$,$C_{10}$) amine (Alamine 336), 20 vol.% of a mixture of 5-dodecylsalicylaldoxime and 2-hydroxy-5-nonylacetophone oxime in kerosene (LIX 984) and 60 vol.% kerosene. All subsequent working steps were the same as those described in Example 2, being carried out in the same order. The copper concentration in the sulphuric acid solution after stripping, was 7.7 g/l.

## EXAMPLE 10

A 40 ml sample of an acidic chloride etching solution having the same composition as that treated in Example 9 was contacted with 40 ml of a mixed extracting agent consisting of 20 vol.% tri-($C_8$,$C_{10}$) amine (Alamine 336), 40 vol.% 2-hydroxy-5-nonylacetophone oxime in kerosene (LIX 84) and 40 vol.% kerosene. All subsequent working operations were the same as those described in Example 2, being carried out in the same order. The copper concentration in the sulphuric acid solution obtained after stripping was 5.4 g/l.

## EXAMPLE 11

A 40 ml sample of an acidic chloride etching solution having the same composition as that treated in Example 9 was contacted with 40 ml of a mixed extracting agent consisting of 20 vol.% tri-

($C_8$,$C_{10}$) amine (Alamine 336), 40 vol.% of 5-dodecylsalicylaldoxime in kerosene (LIX 860) and 40 vol.% kerosene. The heterogeneous mixture obtained was subjected to the working up described in Example 2, all operations being carried out in the same order. The copper concentration in the sulphuric acid solution was 5.6 g/l.

EXAMPLE 12

A 40 ml sample of an acidic chloride etching solution having the same composition as that treated in Example 9 was contacted with 40 ml of a mixed extracting agent consisting of 20 vol.% tri-($C_8$,$C_{10}$) amine (Alamine 336), 40 vol.% of a mixture of 5-dodecylsalicylaldoxime and 2-hydroxy-5-nonylacetophenone oxime in kerosene (LIX 984) and 40 vol.% kerosene. The working up of the heterogeneous mixture obtained was carried out following exactly the same procedure as set out in Example 6, working operations all being carried out in the same order. The copper concentration of the sulphuric acid solution obtained after stripping was 5.6 g/l.

EXAMPLE 13

A 40 ml sample of an acidic chloride etching solution having the same composition as that treated in Example 9 was contacted with 40 ml of a mixed extracting agent consisting of 20 vol.% of tri-octylamine, 40 vol.% of a mixture of 5-dodecylsalicylaldoxime and 2-hydroxy-5-nonylacetophenone oxime in kerosene (LIX 984) and 40 vol.% of kerosene. The working up of the heterogeneous mixture obtained was carried out following exactly the same procedure as set out in Example 6, working operations all being carried out in the same order. The concentration of copper in the sulphuric acid solution obtained after stripping was 4.6 g/l.

EXAMPLE 14

A 40 ml sample of an acidic chloride etching solution having the same composition as that treated in Example 9 was contacted with 40 ml of a mixed extracting agent consisting of 20 vol.% tri-iso-decylamine (Alamine 310), 40 vol.% of a mixture of 5-dodecylsalicylaldoxime and 2-hydroxy-5-nonylacetophenone oxide in kerosene (LIX 984) and 40 vol.% kerosene. The working up of the heterogeneous mixture obtained was the same as described in Example 6, all working operations being carried out in the same order. The concentration of copper in the sulphuric acid solution after stripping amounted to 9.0 g/l.

EXAMPLE 15

A 50 ml sample of a hydrochloric acid solution having a zinc content of 1.37 g/l and 2.1 molar with respect to HCl was contacted with 50 ml of a mixed extracting agent consisting of 20 vol.% tri-n-octylamine and 80 vol.% of β-diketone (LIX 54). The two phases were vigorously mixed for one minute for extraction to take place. After phase separation, only trace amounts of zinc were found in the aqueous phase. The aqueous phase were separated off and the organic phase was washed with dilute solution of ammonia at a pH of about 7. The organic phase was then contacted three times with 50 ml portions of $H_2SO_4$ containing 150 g of $H_2SO_4$ per litre. In this treatment 92.7% of zinc present in the extracting agent was stripped off to yield an organic phase suitable for reuse.

EXAMPLE 16

A 50 ml aqueous hydrochloric acid sample having a pH of about 1 and containing 1.54 g of zinc per litre was contacted with 50 ml of a mixed extracting agent consisting of 20 vol.% tributyl phosphate (TBP), 20 vol.% of di-2-ethylhexyl phosphoric acid (D2EHPA) and 60 vol.% kerosene. The two phases were vigorously mixed for one minute to carry out extraction of zinc from the aqueous phase. After phase separation, only trace amounts of zinc were found in the aqueous phase. The aqueous solution was separated off and the extracting agent was washed several times with water in order to remove chloride ions. The organic phase was then contacted with 50 ml of aqueous $H_2SO_4$ containing 150 g of $H_2SO_4$ per litre and zinc was stripped therefrom. The zinc concentration in the sulphuric acid solution, after stripping, amounted to 1.49 g/l.

EXAMPLE 17

A 50 ml aqueous hydrochloric acid solution having a pH of about 1 and containing 1.54 g per litre of zinc was contacted with 50 ml of a mixed extracting agent consisting of 11 vol.% of trioctyl phosphine oxide (Hostarex PX 324), 22 vol.% of di-2-ethylhexyl phosphoric acid (D2EHPA) and 67 vol.% of kerosene. The two phases were vigorously mixed for one minute to carry out extraction of zinc from the aqueous phase. After phase separation, the concentration of zinc in the aqueous phase was 0.77 g/l. The aqueous phase was separated and the extracting agent was washed several times with water in order to remove chloride ions. The organic phase was then contacted with 50 ml of aqueous $H_2SO_4$ having a concentration of 150 g of $H_2SO_4$ per litre and zinc was stripped from the organic phase. The concentration of zinc in the sulphuric acid solution obtained after stripping was 0.78 g/l.

EXAMPLE 18

A 50 ml aqueous hydrochloric acid solution having a pH of about 1 and having a zinc content of 1.47 g/l was contacted with 50 ml of a mixed extracting agent consisting of 20 vol.% trioctylamine, 20 vol.% of di-2-ethylhexyl phosphoric acid (D2EHPA) and 60 vol.% of kerosene. After carrying out extraction of the zinc from the aqueous phase and phase separation, it was found that the concentration of zinc in the aqueous phase obtained was 0.39 g/l. The aqueous phase was separated off and the extracting agent was washed several times with water in order to remove chloride ions. After this the organic phase was contacted with 50 ml of sulphuric acid having a sulphuric acid content of 150 g/l. The zinc concentration in the sulphuric acid solution, after stripping, was 0.96 g/l.

EXAMPLE 19

A 50 ml sample of aqueous hydrochloric acid 3.7 molar with respect to HCl and having a cobalt content of 1.34 g per litre was contacted with 50 ml of a mixed extracting agent consisting of 20 vol.% of trioctylamine (TOA), 20 vol.% of di-ethylhexyl phosphoric acid (D2EHPA) and 60 vol.% of kerosene. After extraction and phase separation it was found that the concentration of cobalt in the aqueous solution was 0.87 g/l. The aqueous phase was separated off and the organic phase (extracting agent) was washed with 50 ml of aqueous ammonia having a pH of about 7. The organic phase obtained therefrom was then contacted with 50 ml of aqueous sulphuric acid having an $H_2SO_4$ content of 150 g/l. The cobalt concentration in the sulphuric acid solution obtained after stripping was 0.46 g/l.

EXAMPLE 20

A 40 ml sample of an acidic chloride etching solution having a copper content of 89.60 g per litre, which was 3.38 molar with respect to HCl and contained 6.11 g ion $Cl^-$/l was contacted with 40 ml of a mixed extracting agent consisting of 35 vol.% tri-n-octylamine and 65 vol.% of $\beta$-diketone (LIX 54). After carrying out extraction for two minutes and phase separation, the aqueous solution obtained had a copper content of 169.60 g/l, contained 5.51 g ion $Cl^-$/l and was 3.30 molar with respect to HCl. The aqueous solution was separated from the organic phase and the latter was washed with $NH_3$ -($NH4)_2SO_4$ solution of 160 g/l concentration produced during the regeneration of the extracting agent. After this treatment, the washing solution contained trace amounts of copper and the pH was about 4.7. The organic phase was then contacted with 40 ml of sulphuric acid containing 150 g $H_2SO_4$/l. The concentration of copper in the stripping solution amounted to 19.8 g/l. The extracting agent was regenerated with 2.4 mol/l of $NH_4Cl$ solution produced in the washing of the extracting agent. The regenerated extracting agent was fed back to the extraction stage.

## Claims

1. A method for the recovery of a metal from an aqueous chloride solution containing ions of the metal, which comprises extracting the metal by means of an organic extracting agent, separating off the organic phase and stripping the metal from the organic phase to regenerate the extracting agent, characterised in that the metal is extracted from the chloride solution as a metal chloride complex with either (a) a mixture of anion-exchange extracting agent and a chelating extracting agent or (b) a mixture of a solvating extracting agent and a cation-exchange extracting agent or (c) a mixture of an anion extracting agent and a cation-exchange extracting agent, the aqueous raffinate obtained then being separated from the organic phase and the organic phase being freed from chloride ions by washing with water, an aqueous ammonia solution or an aqueous ammoniacal ammonium sulphate solution, followed by stripping the metal from the organic phase by contacting of the latter with aqueous sulphuric acid to yield an aqueous solution of a metal sulphate and returning the organic phase to the extraction stage after regenerating it with a fresh supply of chloride ion-containing aqueous solution.

2. A method as claimed in claim 1, wherein the anion-exchange extracting agent is a tertiary amine.

3. A method as claimed in claim 2, wherein the tertiary amine is selected from trioctylamine, tri-iso-octylamine, tri-iso-decylamine or a mixture of trioctylamine and tridecylamine.

4. A method as claimed in any one of claims 1 to 3, wherein the chelating extracting agent is an oxime.

5. A method as claimed in claim 4, wherein the oxime is selected from 2-hydroxy-5-nonylacetophenone oxime, 5-dodecylsalicylaldoxime and a mixture of 5-dodecylsalicylaldoxime and 2-hydroxy-5-nonylacetophenone oxime.

6. A method as claimed in any one of claims 1 to 3, wherein the chelating extracting agent is a $\beta$-diketone.

7. A method as claimed in claim 1, wherein the solvating extracting agent is tributyl phosphate or tri-n-octylphosphine oxide.

8. A method as claimed in claim 1 or 7, wherein the cation-exchange extracting agent is di-2-ethylhexyl phosphoric acid.

9. A method as claimed in any one of claims 2 to 6 and 8, wherein the contentration of amine in the mixture of anion-exchange extracting agent and chelating extracting agent or in the mixture of anion-exchange extracting agent and cation-exchange extracting agent is from 5 to 50 vol.%.

10. A method as claimed in claim 1, 7 or 8, wherein the concentration of solvating extracting agent in the mixture of solvating extracting agent and cation-exchange extracting agent is from 5 to 50 vol.%.

11. A method as claimed in any preceding claim, wherein the washing with water or $NH_3$-solution or $NH_3$-$(NH_4)_2SO_4$-solution is carried out at pH from 4 to 7.

12. A method as claimed in claim 11, wherein the $NH_3$-$(NH_4)_2SO_4$-solution is prepared by saturation of ammonium sulfate solution produced during the regeneration of the extractant with $NH_3$.

13. A method as claimed in any preceding claim, wherein the stripping of metal from the organic phase is carried out with an aqueous solution of $H_2SO_4$ with a $H_2SO_4$ concentration from 150 to 250 g/l.

14. A method as claimed in any preceding claim, wherein the extractant is regenerated with an aqueous solution of $NH_4Cl$.

15. A method as claimed in claim 14, wherein the aqueous solution of $NH_4Cl$ is produced during the washing of the extracting agent.